# EUROPÄISCHE PATENTANMELDUNG

(11) **EP 3 466 494 A1**
(43) Veröffentlichungstag der Anmeldung: **10.04.2019**
(21) Anmeldenummer: 17194904.3
(22) Anmeldetag: 05.10.2017
(51) Int. Cl.: A62C 3/16, H01M 2/34

(54) **AKKUMODUL MIT EINER BRANDSCHUTZEINRICHTUNG**

(71) Anmelder: aentron GmbH, 82205 Gilching (DE)
(72) Erfinder: De Roche, John, 81369 München (DE)
(74) Vertreter: Keilitz, Wolfgang

(57) **Zusammenfassung**

Die Erfindung betrifft ein Akkumodul (1) mit wenigstens einem Akku (2), der in einem Gehäuse (3) untergebracht ist und über Versorgungsleitungen (11) an eine externe Energiequelle angeschlossen werden kann. Gemäß der Erfindung hat das Gehäuse (3) einen Löschmittelanschluss (7), an dem eine Löscheinrichtung (12) mit einem Löschmittelbehälter (8) angeschlossen ist, so dass in einem Gefahrenfall Löschmittel in das Gehäuse (3) eingebracht werden kann.

## Beschreibung

Die Erfindung betrifft ein Akkumodul, insbesondere für Lithium-Ionen Batterien, mit wenigstens einem Akku, der in einem Gehäuse untergebracht ist.

Akkumodule, auf die hier Bezug genommen wird, umfassen in der Regel eine Vielzahl von Akkus sowie eine Elektronik (das so genannte Batteriemanagementsystem BMS), die das Laden und Entladen der einzelnen Akkus steuert. Bei den Akkus kann es sich z. B. um Rundzellen handeln, die in einem Akkupack integriert sind. Wenn das Batteriemanagementsystem defekt ist, kann der Ladevorgang nicht mehr gesteuert werden. Dies kann dazu führen, dass die Akkus überladen werden und überhitzen. Im schlimmsten Fall kann es zu einem Brand kommen. Gehäuse und Bauteile aus brandfesten Materialien schützen zwar für eine gewisse Zeit, können aber das Ausbreiten eines Brandes nicht vollständig verhindern.

### AUFGABE DER ERFINDUNG

Es ist daher eine Aufgabe der vorliegenden Erfindung, ein Akkumodul zu schaffen, das wesentlich besser vor einem Brand geschützt ist. Gelöst wird diese Aufgabe gemäß der Erfindung durch die im Patentanspruch 1 angegebenen Merkmale. Weitere Ausgestaltungen der Erfindung ergeben sich aus den Unteransprüchen.

Gemäß der Erfindung wird ein Akkumodul mit wenigstens einem Akku vorgeschlagen, der in einem Gehäuse untergebracht ist und über Versorgungsleitungen an eine externe Energiequelle angeschlossen werden kann. Das Gehäuse des Akkumoduls umfasst ferner einen Löschmittelanschluss, an dem eine Löscheinrichtung mit einem Löschmittelbehälter angeschlossen ist. Somit kann in einem Gefahrenfall Löschmittel in das Gehäuse eingespeist werden, um einen Brand zu löschen bzw. frühzeitig zu unterbinden.

Das erfindungsgemäße Akkumodul umfasst vorzugsweise einen Sensor, der den Akkuzustand in Bezug auf einen möglichen Gefahrenfall, d. h. insbesondere eine mögliche Brandgefahr, überwacht. Darüber hinaus ist eine Steuereinheit vorgesehen, die mit dem Sensor in Verbindung steht und die Löscheinrichtung im Gefahrenfall automatisch aktiviert. Ein "Gefahrenfall" kann im Prinzip frei durch Vorgabe bestimmter Parameter oder Schwellenwerte definiert werden, beispielsweise durch Vorgabe einer Temperaturschwelle, einer Druckschwelle und/oder eines Schwellenwerts in Bezug auf Elektrolyt, das aus den Akkus ausgetreten ist.

Der genannte Sensor zur Überwachung des Akkuzustands ist vorzugsweise eine vom Batteriemanagementsystem (BMS) unabhängige Einheit, die von einer separaten Energiequelle versorgt wird. Im Normalbetrieb steuert das BMS den Lade- und Entladevorgang der Akkus und verhindert dabei auch ein Überladen oder Tiefentladen der Akkus. Im Falle eines Fehlers des BMS kann der Akkuzustand vom Sensor überwacht werden, da er unabhängig vom BMS arbeitet. Der Sensor bildet also eine sekundäre Überwachungseinheit, die vom BMS unabhängig ist.

Die vorstehend genannte Steuereinheit ist vorzugsweise dazu eingerichtet, ein Ventil der Löscheinrichtung im Gefahrenfall anzusteuern, um Löschmittel in das Gehäuse einströmen zu lassen.

Gemäß einer bevorzugten Ausführungsform der Erfindung ist an wenigstens einer der Versorgungsleitungen eine Trennvorrichtung angeordnet, die die betreffende Versorgungsleitung im Gefahrenfall mechanisch abtrennt. D.h., die Versorgunsleitung(en) wird/werden gekappt.

Die Trennvorrichtung kann beispielsweise als eine pyrotechnische Trennvorrichtung realisiert sein. Sie kann beispielsweise eine Gaskartusche enthalten, die die Energie für das Abtrennen des Kabels liefert. Gemäß der Erfindung ist die Trennvorrichtung vorzugsweise innerhalb des Gehäuses angeordnet.

Das Gehäuse des erfindungsgemäßen Akkumoduls umfasst vorzugsweise auch eine Entlüftungsöffnung mit einem Verschluss, der sich im Gefahrenfall automatisch öffnet. Dadurch kann das Löschmittel wesentlich schneller in das Gehäuse einströmen.

Gemäß einer speziellen Ausführungsform der Erfindung ist der Verschluss als ein elastisches Element ausgebildet, das bei einem Überdruck im Gehäuse automatisch aus der Einlassöffnung herausgedrückt wird und somit die Einlassöffnung freigibt.

Der eingangs genannte Sensor zur Überwachung des Akkuzustands kann beispielsweise ein Elektrolytsensor, ein Temperatursensor oder ein Drucksensor sein. Es können auch verschiedene Sensoren unterschiedlichen Typs eingesetzt werden.

Das erfindungsgemäße Akkumodul umfasst ferner auch eine von den Akkus unabhängige, zweite Energiequelle, die die Steuereinheit mit elektrischer Leistung versorgt. Dadurch ist sichergestellt, dass die Steuereinheit auch funktioniert, wenn die im Gehäuse enthaltenen Akkus oder das Batteriemanagementsystem fehlerhaft sind.

### KURZE BESCHREIBUNG DER ZEICHNUNGEN

Die Erfindung wird nachstehend anhand der beigefügten Zeichnungen beispielhaft näher erläutert.

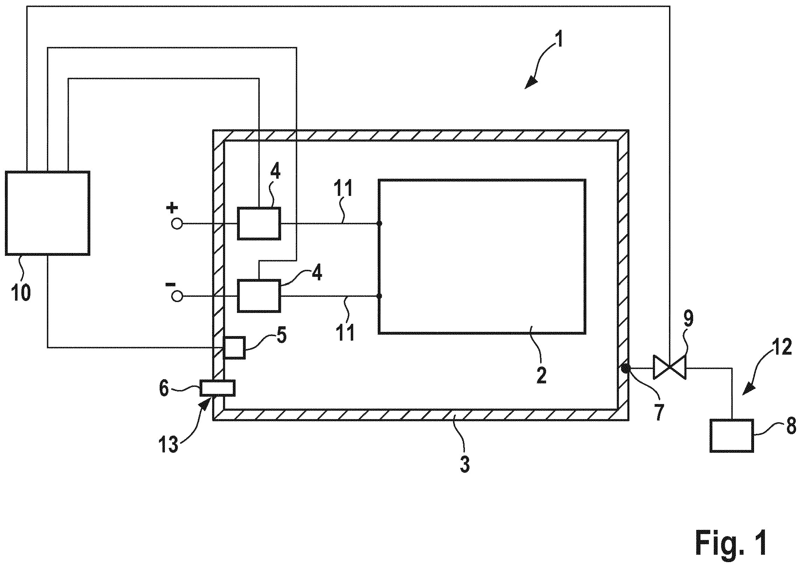

Fig. 1 zeigt eine schematische Schaltskizze eines Akkumoduls 1 gemäß einer Ausführungsform der Erfindung. Das Akkumodul 1 umfasst eine Gehäuse 3, in dem ein Akkupack mit mehreren Akkus 2 untergebracht ist. Die Akkus sind über Versorgungsleitungen 11 mit zwei Klemmen (+, -) verbunden, an denen eine externe Energiequelle, wie z. B. ein Photovoltaikmodul oder eine Netzspannung, angeschlossen werden kann. Das Gehäuse 3 umfasst einen Löschmittelanschluss 7, an dem eine Löscheinrichtung 12 mit einem Löschmittelbehälter 8 angeschlossen ist. Bei einer Überhitzung der Akkus 2 oder im Brandfall kann somit ein Löschmittel in das Gehäuse 3 eingespeist werden, um einen Brand zu verhindern bzw. zu löschen.

Bei dem Löschmittel kann es sich beispielsweise um ein Gas oder einen Löschschaum handeln.

Um das Einströmen des Löschmittels in das Gehäuse 3 zu ermöglichen, umfasst das Gehäuse 3 ferner eine Entlüftungsöffnung 13, in der ein elastischer Verschluss 6 angeordnet ist, der bei einem im Gehäuse 3 herrschenden Überdruck automatisch aus der Entlüftungsöffnung 13 herausgedrückt wird und die Entlüftungsöffnung 13 freigibt.

Das in Fig. 1 dargestellte Akkumodul 1 umfasst ferner eine Steuereinheit 10 sowie einen daran angeschlossenen Sensor 5, der im Gehäuse 3 angeordnet ist und den Akkuzustand in Bezug auf einen möglichen Gefahrenfall überwacht. Bei dem Sensor kann es sich beispielsweise um einen Elektrolytsensor handeln, der ein Austreten von Elektrolyt aus den Akkus detektieren kann. Alternativ oder zusätzlich kann auch ein Temperatursensor oder ein Drucksensor vorgesehen sein.

Die Steuereinheit 10 ist hier derart eingerichtet, dass sie im Gefahrenfall ein Ventil 9 der Löscheinrichtung 12 ansteuert, um Löschmittel in das Gehäuse 3 einströmen zu lassen. Der "Gefahrenfall", in dem die Löscheinrichtung 12 aktiviert wird, kann im Prinzip frei definiert werden, beispielsweise durch Vorgabe entsprechender Schwellenwerte für die überwachten Parameter.

Die Steuereinheit 10 wird vorzugsweise von einer unabhängigen zweiten Energiequelle, wie beispielsweise einer Batterie, mit elektrischer Leistung versorgt. Dadurch wird sichergestellt, dass die Steuereinheit 10 auch noch bei einem fehlerhaften Batteriemanagementsystem oder defekten Akkus 2 funktioniert.

Das erfindungsgemäße Akkumodul 1 umfasst als weitere Schutzvorrichtung zusätzlich eine Trennvorrichtung 4, die in der Lage ist, eine Versorgungsleitung 11 im Gefahrenfall mechanisch zu kappen. Im dargestellten Ausführungsbeispiel ist für jede der Versorgungsleitungen 11 eine eigene Trennvorrichtung 4 vorgesehen. Dabei kann es sich beispielsweise um eine pyrotechnische Trennvorrichtung handeln.

Das erfindungsgemäße Akkumodul 1 arbeitet im Gefahrenfall vorzugsweise nach folgendem Verfahren: Sobald ein Gefahrenzustand erkannt wurde, steuert die Steuereinheit 10 zunächst die Trennvorrichtung(en) 4 an, wodurch die Versorgungsleitungen 11 abgetrennt werden. Dadurch wird verhindert, dass den Akkus 2 weiterhin Energie zugeführt wird und sie noch stärker überhitzen. Gleichzeitig oder danach wird dann das Ventil 9 der Löscheinrichtung 12 angesteuert, so dass Löschmittel aus dem Löschmittelbehälter 8 in das Gehäuse 3 einströmen kann. Durch den in Gehäuse 3 entstehenden Überdruck wird der Verschluss 6 aus der Entlüftungsöffnung 13 herausgedrückt, so dass das Löschmittel schneller in das Gehäuse 3 einströmen kann. Im besten Fall wird dadurch ein Brand innerhalb weniger Sekunden gelöscht.

## Patentansprüche

1. Akkumodul (1) mit wenigstens einem Akku (2), der in einem Gehäuse (3) untergebracht ist und über Versorgungsleitungen (11) an eine externe Energiequelle angeschlossen werden kann, **dadurch gekennzeichnet, dass** das Gehäuse (3) einen Löschmittelanschluss (7) aufweist, an dem eine Löscheinrichtung (12) mit einem Löschmittelbehälter (8) angeschlossen ist, sodass in einem Gefahrenfall Löschmittel in das Gehäuse (3) eingebracht werden kann.

2. Akkumodul (1) nach Anspruch 1, **dadurch gekennzeichnet, dass** das Akkumodul (1) ferner einen Sensor (5), der den Akkuzustand in Bezug auf einen möglichen Gefahrenfall überwacht, sowie eine Steuereinheit (10) umfasst, die die Löscheinrichtung (12) im Gefahrenfall automatisch aktiviert.

3. Akkumodul (1) nach Anspruch 2, **dadurch gekennzeichnet, dass** die Steuereinheit (10) dazu eingerichtet ist, ein Ventil (9) der Löscheinrichtung (12) im Gefahrenfall anzusteuern, um Löschmittel in das Gehäuse (3) einströmen zu lassen.

4. Akkumodul (1) nach einem der vorhergehenden Ansprüche, **dadurch gekennzeichnet, dass** an wenigstens einer der Versorgungsleitungen (11) eine Trennvorrichtung (4) angeordnet ist, die die betreffende Versorgungsleitung (11) im Gefahrenfall mechanisch abtrennen kann.

5. Akkumodul (1) nach Anspruch 4, **dadurch gekennzeichnet, dass** die Trennvorrichtung (4) eine pyrotechnische Trennvorrichtung ist.

6. Akkumodul (1) nach Anspruch 4 oder 5, **dadurch gekennzeichnet, dass** die Trennvorrichtung (4) im Gehäuse (3) angeordnet ist.

7. Akkumodul (1) nach einem der vorhergehenden Ansprüche, **dadurch gekennzeichnet, dass** das Gehäuse (3) eine Entlüftungsöffnung (13) mit einem Verschluss (6) aufweist, der sich im Gefahrenfall automatisch öffnet.

8. Akkumodul (1) nach Anspruch 7, **dadurch gekennzeichnet, dass** der Verschluss (6) ein elastisches Element umfasst, das bei einem Überdruck im Gehäuse (3) automatisch aus der Entlüftungsöffnung (13) herausgedrückt wird.

9. Akkumodul (1) nach Anspruch 2, **dadurch gekennzeichnet, dass** der Sensor (5) ein Elektrolytsensor, ein Temperatursensor oder ein Drucksensor ist.

10. Akkumodul (1) nach Anspruch 2, **dadurch gekennzeichnet, dass** das Akkumodul (1) eine von den Akkus (2) unabhängige zweite Energiequelle umfasst, die die Steuereinheit (10) mit elektrischer Leistung versorgt.
